## Europäisches Patentamt

## European Patent Office

## Office européen des brevets

(19)

(11) Veröffentlichungsnummer: **0 076 951**
**A1**

(12) **EUROPÄISCHE PATENTANMELDUNG**

(21) Anmeldenummer: **82108815.0**

(22) Anmeldetag: **23.09.82**

(51) Int. Cl.³: **G 01 F 1/68**

(30) Priorität: **30.09.81 DE 3138910**

(43) Veröffentlichungstag der Anmeldung: **20.04.83**
**Patentblatt 83/16**

(84) Benannte Vertragsstaaten: **FR GB NL**

(71) Anmelder: **SIEMENS AKTIENGESELLSCHAFT, Berlin und München Wittelsbacherplatz 2, D-8000 München 2 (DE)**

(72) Erfinder: **Kammermaier, Johann, Dr.rer.nat., Ziehrerstrasse 19, D-8025 Unterhaching (DE)**
Erfinder: **Knauer, Rudolf, Dipl.-Phys., Neisseweg 6, D-8012 Ottobrunn (DE)**

(54) **Mengendurchflüssmesser.**

(57) Es wird ein Mengendurchflußmesser beschrieben, bei dem ein strömendes Medium an einem dünnen Substrat (1) mit zwei stromdurchflossenen, temperaturabhängigen Widerstandsschichten vorbeigeführt wird, wobei die eine Widerstandsschicht durch einen elektrischen Strom aufgeheizt wird und als Meßwiderstand (R1) dient, während die zweite Widerstandsschicht als Vergleichswiderstand (R2) dient und durch den elektrischen Strom praktisch nicht aufgeheizt wird, bei dem weitere elektrische Widerstände (R1', R2') vorhanden sind, die mit dem Meßwiderstand (R1) und dem Vergleichswiderstand (R2) zusammen eine Widerstandsbrücke bilden und in welchem Einrichtungen zur elektronischen Steuerung des Brückenstromes in Abhängigkeit von der Spannung am Brückenabgriff vorgesehen sind, wobei die Änderung des Brückenstromes als Maß für die Menge des strömenden Mediums dient. Der Meßwiderstand (R1) ist möglichst nahe an der der Strömungsrichtung zugewandten Kante (8) des Substrats (1) angebracht und so ausgerichtet, daß der Stromfluß im Meßwiderstand (R1) senkrecht zur Strömungsrichtung des Mediums erfolgt, und daß das Substrat (1) im Bereich des Meßwiderstandes (R1) perforiert ist.

Der Mengendurchflußmesser ist verwendbar zur Steuerung der Luftzufuhr bei Verbrennungsmotoren.

SIEMENS AKTIENGESELLSCHAFT
Berlin und München

Unser Zeichen

VPA

81 P 1163 E

0076951

Mengendurchflußmesser.

Die vorliegende Erfindung betrifft einen Mengendurchflußmesser, bei dem ein strömendes Medium an zwei stromdurchflossenen elektrischen Leitern mit temperaturabhängigem
Widerstand vorbeigeführt wird, bei dem der eine elektrische Leiter durch einen elektrischen Strom aufgeheizt
wird und als Meßwiderstand dient, während der zweite
elektrische Leiter als Vergleichswiderstand dient und
durch den elektrischen Strom nicht aufgeheizt wird, bei
dem weitere elektrische Widerstände vorhanden sind, die
mit dem Meßwiderstand und dem Vergleichswiderstand zusammen eine Widerstandsmeßbrücke bilden und in welchem Einrichtungen zur elektrischen Steuerung des Brückenstromes
in Abhängigkeit von der Spannung am Brückenabgriff vorgesehen sind, welche die Spannung am Brückenabgriff verschwinden lassen und bei dem die Änderung des Brückenstromes als Maß für die Menge des strömenden Mediums ausgewertet
wird, und bei dem der Meßwiderstand und der Vergleichswiderstand als dünne Widerstandsschichten ausgebildet sind,
welche auf ein dünnes Substrat aufgebracht sind.

Aus DE-OS 29 25 975 ist ein resistiver Mengendurchflußmesser in Folientechnik bekannt, der Flüssigkeits- und Gasströmungen erfaßt und elektronisch verwertbare Signale
liefert. Ein Fühlerelement enthält auf einer Folie einen
aufgedampften Meßwiderstand $R_1$ und einen Vergleichswiderstand $R_2$, die mit weiteren Widerständen $R_1'$ und $R_2'$ in
eine Widerstandsmeßbrücke so zusammengeschaltet sind,
daß sich der Meßwiderstand $R_1$ bei Stromfluß aufheizt, während der Vergleichswiderstand $R_2$ praktisch nicht aufgeheizt wird. Wird dem geheizten Meßwiderstand $R_1$ durch ein
darüberströmendes Medium Wärme entzogen, so ist die entzogene Wärme ein Maß für die Strömungsgeschwindigkeit des Me-

Kus 1 Lk /28.9.1981

0076951

diums. Da die dem Meßwiderstand R1 entzogene Wärme mittels einer Reglerschaltung in Form von Stromwärme eines Zusatzstromes wieder zugeführt wird, ist auch der Zusatzstrom ein Maß für die Strömungsgeschwindigkeit des Mediums. Mit einem derartigen Mengendurchflußmesser kann z.B. in Kraftfahrzeugverbrennungsmotoren die Ansaugluft gemessen werden, um eine energiesparende und umweltfreundliche Steuerung des Kraftstoffumsatzes durchzuführen. Für eine genügend genaue Steuerung der angesaugten Luft ist jedoch erforderlich, daß der Mengendurchflußmesser auftretenden Strömungsänderungen möglichst schnell zu folgen vermag. Für eine brauchbare Steuerung der Luftzufuhr muß z.B. der 90%-Wert einer sprunghaften Strömungsänderung in Zeiten zwischen 30ms und 50ms angezeigt bzw. nachgeregelt werden.

Diese kurzen Ansprechzeiten sind bei den bekannten Mengendurchflußmessern im beabsichtigten Einsatzbereich nicht erzielbar. Zwar sind zur Durchflußmessung von Luftmassen derzeit auch Fühler mit temperaturabhängigen Widerständen aus Kaltleitern, Halbleiterelementen (sog. spreading resistance) oder aus Metalldrähten bekannt.

Die mit Kaltleitern oder spreading resistance aufgebauten Durchflußfühler sind wegen der vergleichsweise hohen Wärmekapazität ihrer Elemente zur Erfassung schneller Strömungsänderungen thermisch zu träge und daher ungeeignet.

Fühler, die aus Widerstandsdrähten aufgebaut sind, lassen sich zwar mit geringer thermischer Trägheit herstellen. Ungünstig ist jedoch, daß sie wegen ihrer nicht beliebig zu variierenden Abmessungen nur für relativ niedrige Wistandswerte ausgelegt werden können. Selbst unter sehr niedrigen Betriebsspannungen ergeben sich daher im geheizten Widerstand relativ hohe Übertemperaturen bis zu 200°K, die gerade für den Kraftfahrzeugeinsatz ungeeignet sind und außerdem die Dauerstabilität des Fühlers gefährden.

Aufgabe der vorliegenden Erfindung ist es daher, einen stabilen Mengendurchflußmesser anzugeben, der mit kleinen Übertemperaturen arbeitet, im Kraftfahrzeugbereich einsetzbar ist und zugleich eine ausreichend geringe Ansprech- und Einstellzeit aufweist, so daß dieser zur Regelung der Ansaugluft bei Verbrennungsmotoren verwendet werden kann.

Diese Aufgabe wird durch einen Mengendurchflußmesser der eingangs erwähnten Art dadurch gelöst, daß der Meßwiderstand R1 möglichst nahe an der der Strömungsrichtung zugewandten Kante des Substrats angebracht ist und so ausgerichtet ist, daß der Stromfluß im Meßwiderstand R1 senkrecht zur Strömungsrichtung des Mediums erfolgt, und daß das Substrat im Bereich des Meßwiderstandes R1 eine möglichst kleine Wärmekapazität besitzt.

Diese Maßnahmen bewirken eine relativ kurze Ansprechzeit des Meßfühlers bei einer im Kraftfahrzeugbereich in günstiger Weise anwendbaren Übertemperatur von maximal ca. 40°K. Durch die erfindungsgemäße Positionierung des Meßfühlers bzw. des Meßwiderstandes R1, in dem die Stromrichtung quer, insbesondere senkrecht zur Strömung des Mediums verläuft und der möglichst nahe an der angeströmten Kante angebracht ist, läßt sich eine Verkürzung der Ansprechzeit um ca. 30% erreichen gegenüber Ansprechzeiten von entsprechenden Fühlern, bei denen die Stromrichtung im Meßwiderstand R1 parallel zur Strömungsrichtung des Mediums angebracht ist.

Zur Erlangung einer geringen Wärmekapazität des Substrats ist es vorteilhaft, daß das Substrat 1 aus einer doppelschichtigen, im Bereich des Meßwiderstandes R1 stark perforierten dünnen Kunststoffolie besteht, bei der der Meßwiderstand R1 zwischen beiden Folienschichten angebracht ist.

0076951

Durch die erfindungsgemäße Perforation läßt sich die Ansprechzeit eines erfindungsgemäßen Mengendurchflußmessers um ca. 50% reduzieren.

Weiterhin ist es vorteilhaft, daß das Substrat 1 aus einer 12μm dicken Polyimidfolie besteht, da damit eine sehr kleine Wärmekapazität erreicht wird.

Es ist auch vorteilhaft, daß bei der Widerstandsbrücke Einrichtungen vorgesehen sind, die eine Frequenzgangkorrektur ermöglichen. Durch diese Maßnahme läßt sich die Ansprechzeit auf elektronischem Wege über eine Frequenzanhebung im Nachfolgeverstärker der Schaltung noch weiter verkürzen.

Es ist vorteilhaft, daß bei der Frequenzgangkorrektur zu höheren Frequenzen hin maximal eine Verstärkung des Meßsignals um ca. den Faktor 2 erfolgt. Diese Bemessung ist sinnvoll, weil sonst die Gefahr des Überschwingens zu groß würde und außerdem höherfrequente Strömungen (z.B. Rauschen) zu stark in Erscheinung treten würden.

Nachfolgend wird die Erfindung anhand der Zeichnung und einem Ausführungsbeispiel näher erläutert. Es zeigen:

Fig. 1 ein Schaltbild einer verwendeten Widerstandsmeßbrücke,

Fig. 2 einen Meßfühler mit erfindungsgemäßer Anordnung des Meßwiderstandes R1 in einer Draufsicht,

Fig. 3 eine Schaltung eines erfindungsgemäßen Mengendurchflußmessers mit Frequenzgangkorrektur.

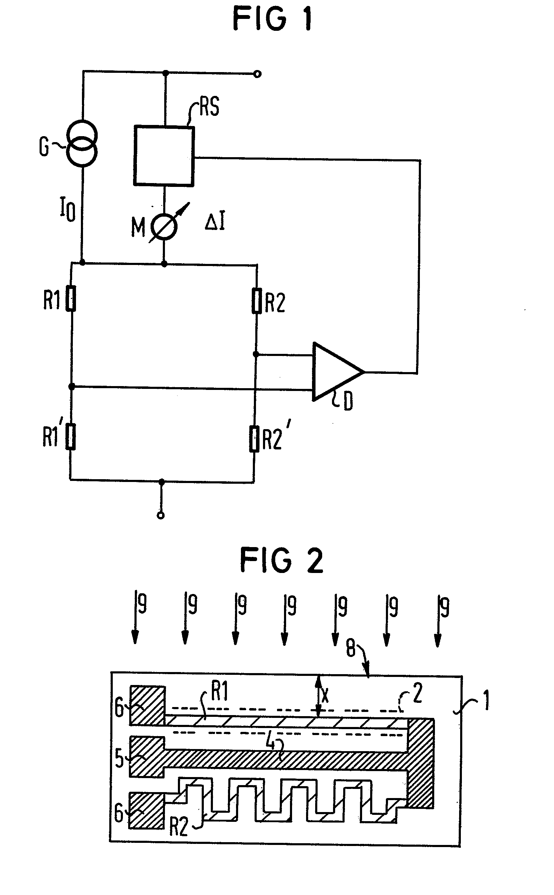

Im Schaltbild gemäß Fig. 1 ist eine Brücke aus den Widerständen R1, R2, R1', R2' aufgebaut. Die Brücke wird im abgeglichenen Zustand mittels der Konstantstromquelle G mit dem Strom $I_0$ gespeist. Durch Abkühlen des Meßwiderstandes R1 wird dessen Widerstand somit verändert. Die Meßbrücke ist somit nicht mehr abgeglichen. Ein Differenzverstärker D bewirkt über eine Reglerschaltung RS einen Brückenabgleich durch Änderung des Brückenstromes $I_0$ um den Differenzstrom $\Delta I$. Ein Meßgerät M zeigt den Differenzstrom $\Delta I$ bzw. die diesem Differenzstrom $\Delta I$ entsprechende Durchflußmenge des strömenden Mediums an.

In Fig. 2 sind der geheizte Meßwiderstand R1 und der ungeheizte Vergleichswiderstand R2 auf einem dünnen Substrat 1 angebracht. Vorzugsweise werden auf einer 12 µm dicken Polyimidfolie die Widerstände R1 und R2 als Nickelaufdampfwiderstände so angebracht, daß der Widerstand R1 möglichst nahe an der Anströmkante 8 zum strömenden Medium hin angebracht ist. Die Strömungsrichtung des strömenden Mediums ist durch die Pfeile 9 angedeutet. Die Entfernung x zwischen Meßwiderstand R1 und Anströmkante 8 wird zur Erlangung geringer thermischer Trägheit minimiert. Es gilt:

$$\propto \, \sim \, \frac{v^{0,8}}{x^{0,2}} \tag{I}$$

wobei $\propto$ : Wärmeübergangszahl für turbulente Strömung

v : Strömungsgeschwindigkeit des Mediums

x : Abstand zwischen R1 und Anströmkante 8 bedeuten.

Außerdem gilt: $Q = \propto \cdot \Delta T$ \hfill (II)

Q : Wärmefluß vom Meßwiderstand R1 zum strömenden Medium

$\Delta T$ : Temperaturdifferenz zwischen Meßwiderstand R1 und strömendem Medium.

Aus den Gleichungen I und II sieht man, daß eine Minimierung von x zu einer Maximierung des Wärmeflusses Q vom Meßwiderstand R1 zum strömenden Medium bei sonst gleichen Bedingungen führt. Auf dem Substrat 1 sind außerdem eine Leiterbahn 4 und Kontaktflächen 5 und 6 angebracht. Das Substrat 1 ist bei einem speziellen Ausführungsbeispiel eine Polyimidfolie von 12 µm Dicke, die mit einer zweiten Polyimidfolie von ebenfalls 12 µm Dicke auf der bedampften Oberfläche überdeckt wird. Das Substrat 1 bzw. beide Schichten der Polyimidfolie werden im Bereich des Meßwiderstandes R1 stark perforiert (angedeutet durch die

0076951

strichlierten Linien . 2), wodurch sich die Wärmekapazität und damit auch die thermische Trägheit des hier beschriebenen Meßfühlers in vorteilhafter Weise herabsetzen läßt.

Aus Gründen einer guten mechanischen Stabilität kann der beschriebene Meßfühler in Bereichen außerhalb der Widerstände R1 und R2 auch mittels eines Versteifungsrahmens verstärkt sein, der aus Gründen der guten Übersichtlichkeit in Fig. 2 nicht dargestellt ist.

Zur Erlangung einer optimalen Ansprechzeit des in Fig. 2 dargestellten Meßfühlers wird dieser so im strömenden Medium angebracht, daß die Stromrichtung im Meßwiderstand R1 quer, insbesondere senkrecht zur Strömungsrichtung (dargestellt durch die Pfeile 9) zeigt. Messungen haben ergeben, daß diese Anordnung im strömenden Medium bei einem Meßfühler nach Fig. 2 eine um 30% kürzere Ansprechzeit erzielt als eine Anordnung dieses Meßfühlers im strömenden Medium, bei dem die Strömungsrichtung parallel zur Stromrichtung im Meßwiderstand R1 erfolgt. Die Substratfläche ist stets parallel zur Strömungsrichtung angeordnet.

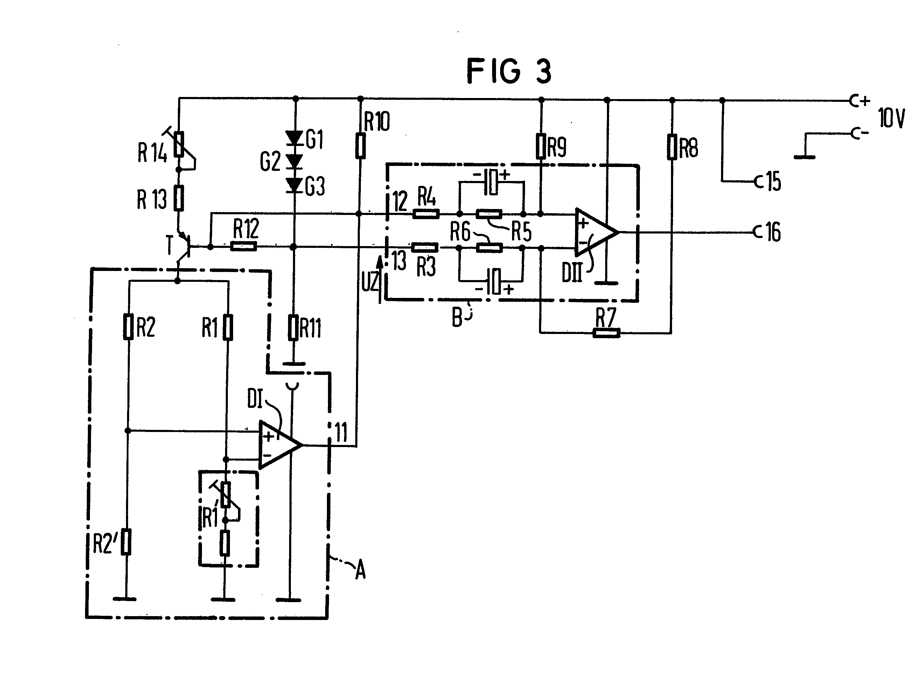

Fig. 3 stellt eine Schaltung eines erfindungsgemäßen Mengendurchflußmessers mit Frequenzgangkorrektur dar. Der mittels strichlierter Umrandung abgegrenzte Teil A dieser Schaltung stellt die Meßbrücke, wie sie bei Fig. 1 beschrieben ist, dar. Gleiche Widerstände wurden mit gleichen Zeichen versehen. Der Widerstand R1' wird durch einen festen Widerstand von ca. 62Ω und einem regelbaren Widerstand von 20Ω realisiert. Der Differenzverstärker D aus Fig. 1 ist hier mit $D_I$ bezeichnet, da in der Schaltung ein zweiter Differenzverstärker vorhanden ist.

Der strichliert abgegrenzte Teil B der vorliegenden Schaltung bewirkt eine Frequenzgangkorrektur der vom Differenzverstärker $D_I$ abgegebenen Signale. Der Kondensator C1 ist zum Widerstand $R_6$ parallelgeschaltet, während der Kondensator $C_2$ mit dem Widerstand $R_5$ parallelgeschaltet ist. Die Dimensionierung der Widerstände und Kapazitäten wurde so gewählt, daß hohe Frequenzen um den Faktor 2 mehr verstärkt werden als die niedrigen. Die Kondensatoren C1 und C2 haben eine Kapazität von $3,3\mu F$ und können durch Elektrolytkondensatoren oder auch durch Tantalkondensatoren verwirklicht werden.

Der restliche Teil der Schaltung, bestehend aus den Widerständen $R_7$ bis $R_{13}$, dem Transistor T und den Gleichrichtern G1 bis G3, verwirklicht die in Fig. 1 angedeutete Reglerschaltung RS. Die Anschlüsse 15 und 16 bilden den Ausgang der Schaltung.

Die einzelnen Widerstände wurden in der Schaltung nach Fig. 3 wie folgt dimensioniert: R1 = 70Ω, R2 = 1kΩ, R1' besteht aus einem regelbaren Widerstand von 20Ω plus einem festen Widerstand von 62Ω, R2' = 1kΩ, $R_3$ = $R_4$ = $R_5$ = $R_6$ = 100kΩ, $R_7$ = $R_9$ = 470kΩ, $R_8$ = 1kΩ, $R_{10}$ = 2,2kΩ, $R_{11}$ = 1,5kΩ, $R_{12}$ = 1kΩ, $R_{13}$ = 39Ω und der regelbare Widerstand $R_{14}$ = 20Ω. Diese Dimensionierung der Schaltung nach Fig. 3 ist nur ein mögliches Ausführungsbeispiel.

Durch den erfindungsgemäßen Mengendurchflußmesser werden kurze Ansprech- und Einstellzeiten erreicht. Der 90% Wert einer sprunghaften Strömungsänderung wird in einer Zeit von ca. 30ms bis 50ms erreicht. Die günstigen Ansprech- und Einstellzeiten werden durch die Minimierung der thermischen Trägheit eines Meßfühlers nach Fig. 2 durch die bei Fig. 2 beschriebenen Maßnahmen erreicht. Eine zusätzliche Frequenzgangkorrektur durch den Schaltungsteil B aus Fig. 3 ermöglicht eine optimale Ausnutzung der geringen thermischen Trägheit des Meßfühlers, da durch die Frequenzgangkorrektur anfängliche Dämpfungen der vom Meßfühler abgegebenen elektrischen Signale beseitigt werden.

Die Minimierung der thermischen Trägheit des Meßfühlers wird, wie bei Fig. 2 näher beschrieben, mittels Perforation des Meßfühlers im Bereich des Meßwiderstandes R1, durch eine Minimierung der Entfernung x zwischen Meßwiderstand R1 und der Anströmkante des Meßfühlers sowie durch die räumliche Anordnung des Meßfühlers zur Strömungsrichtung erreicht. Durch die Minimierung des Abstandes x und die Lage des Meßfühlers quer zur Strömungsrichtung läßt sich eine dünne Luftgrenzschicht angrenzend an den Meßwiderstand R1 erreichen, womit ein guter Wärmefluß zwischen Luftströmung und Meßwiderstand R1 erreicht wird. Eine etwaige Wirbelbildung an der Vorderkante des Meßfühlers ist für die Stabilität des Meßsignals unschädlich, weil die zu messende Strömung im Falle des Mediums Luft in dem in Frage kommenden Geschwindigkeitsbereich (v=1...35m/s) ohnehin stark turbulent ist und außerdem im Vergleich zur strömenden Flüssigkeit eine um Größenordnungen niedrigere konvektive Wärmetransportfähigkeit besitzt. Wie Messungen zeigen, weist ein eingangs beschriebener Meßfühler in Folientechnik mit 50µm Folienstärke beim Einsatz zur Messung von Luftströmungen im Strömungsbereich von ca. v=1m/s bis 35m/s Ansprech- und Einstellzeiten von ca. 300ms auf, falls dieser Fühler nicht perforiert und der Widerstand R1 nicht der Anströmkante zugewandt ist und falls keine Frequenzgangkorrektur vorgesehen ist.

Die Verwendung einer 12µm dicken Folie bewirkt eine Verringerung der Ansprech- und Einstellzeit auf ca. 150ms.

Die Verwendung einer 12µm dicken, nach Fig. 2 perforierten Folie sowie die Ausrichtung des Meßwiderstandes R1 relativ zur Luftströmung und die Minimierung des Abstandes x zwischen Anströmkante und Meßwiderstand R1 bewirken eine weitere Verringerung der Ansprech- und Einstellzeit auf ca. 70ms. Mit einer zusätzlich dazu angebrachten Frequenzgangkorrektur, wie sie durch Teil B aus Fig. 3 erreicht wird, wird die Ansprech- und Einstellzeit eines

0076951

erfindungsgemäßen Mengendurchflußmessers auf ca. 35ms herabgesetzt.

Bei Meßfühlern nach Fig. 2 erfolgt die Wärmeausbreitung in perforierten Substraten vorwiegend nur in Normalenrichtung und somit an nahezu allen Punkten der Wärmequelle über gleichlange Wege. Seitliche Wärmeausbreitungen enden an den Perforationskanten und werden dadurch verhindert. Bei einem so beschaffenen Meßfühler ist es möglich, die Einstellzeit bzw. Ansprechzeit auf elektronischem Wege über eine Frequenzanhebung im Nachfolgeverstärker der Schaltung noch weiter zu verkürzen. Die Ausgestaltung des Meßfühlers nach Fig. 2 ist somit Voraussetzung für die Anwendbarkeit der Frequenzgangkorrektur nach Teil B der Schaltung aus Fig. 3.

Die im Teil A der Fig. 3 dargestellte Widerstandsbrücke mit einem in Fig. 2 ausgeführten Meßfühler wird durch den Differenzverstärker $D_I$ so nachgeregelt, daß für eine bestimmte Temperatur des strömenden Mediums der geheizte Meßwiderstand R1 sich immer wieder auf einen solchen Widerstandswert einstellt, daß der Quotient R1/R2 konstant ist. Die in Fig. 3 an den Eingängen 12, 13 der Widerstände $R_4$ und $R_3$ anliegende Spannung $U_Z$ ist eine dem Nachregelstrom proportionale Spannung. Sie ist ein Maß für die Strömungsgeschwindigkeit des Mediums v. $U_Z$ wird vom Differenzverstärker $D_{II}$ verstärkt und einseitig auf ein festes Potential gelegt. Die den Widerständen $R_5$ und $R_6$ parallel geschalteten Kapazitäten $C_2$ und $C_1$ bewirken eine Bevorzugung der hohen Frequenzen. Die Verstärkung kann sich in Abhängigkeit von der Frequenz maximal um den Faktor 2 ändern. Zu Beginn einer sprunghaften Änderung ist die Verstärkung von $U_Z$ am stärksten und nimmt dann mit der eingestellten Zeitkonstanten auf den Wert der Endverstärkung ab.

Voraussetzung für die Anwendung der beschriebenen Fre-

0076951

quenzgangkorrektur ist eine feste Zeitkonstante für den Signalanstieg. Diese Voraussetzung ist bei dem nach Fig.2 dargestellten und beschriebenen Meßfühler mit dem Medium Luft in einem Geschwindigkeitsbereich von v=1m/s (bis 35m/s) erfüllt.

Außerdem müssen die folgenden Bedingungen erfüllt sein, um eine feste Zeitkonstante für den Signalanstieg bei Meßfühlern zu erlangen: Die Dicke der Luftrandschicht darf sich prozentual nicht zu stark ändern, das heißt: die relative Geschwindigkeitsänderung der Luft darf nicht zu groß sein. Diese Bedingungen sind z.B. bei der Messung der Ansaugluft in Kraftfahrzeugmotoren erfüllt, da immer eine Restluftgeschwindigkeit vorhanden ist.

Erfindungsgemäße Mengendurchflußmesser eignen sich zur Regelung der Luftzufuhr bei Verbrennungsmotoren, insbesondere von Kraftfahrzeugen.

Die Erfindung ist jedoch nicht auf diese Anwendung beschränkt.

5 Patentansprüche
3 Figuren

Patentansprüche

1. Mengendurchflußmesser, bei dem ein strömendes Medium an zwei stromdurchflossenen elektrischen Leitern mit temperaturabhängigem Widerstand vorbeigeführt wird, bei dem der eine elektrische Leiter durch einen elektrischen Strom aufgeheizt wird und als Meßwiderstand dient, während der zweite elektrische Leiter als Vergleichswiderstand dient und durch den elektrischen Strom nicht aufgeheizt wird, bei dem weitere elektrische Widerstände vorhanden sind, die mit dem Meßwiderstand und dem Vergleichswiderstand zusammen eine Widerstandsbrücke bilden und in welchem Einrichtungen zur elektronischen Steuerung des Brückenstromes in Abhängigkeit von der Spannung am Brückenabgriff vorgesehen sind, welche die Spannung am Brückenabgriff verschwinden lassen und bei dem die Änderung des Brückenstromes als Maß für die Menge des strömenden Mediums ausgewertet wird, und bei dem der Meßwiderstand und der Vergleichswiderstand als dünne Widerstandsschichten ausgebildet sind, welche auf ein dünnes Substrat aufgebracht sind, dadurch gekennzeichnet, daß der Meßwiderstand (R1) möglichst nahe an der der Strömungsrichtung zugewandten Kante (8) des Substrats angebracht ist und so ausgerichtet ist, daß der Stromfluß im Meßwiderstand (R1) senkrecht zur Strömungsrichtung des Mediums erfolgt; und daß das Substrat (1) im Bereich des Meßwiderstandes (R1) eine möglichst kleine Wärmekapazität besitzt.

2. Mengendurchflußmesser nach Anspruch 1, dadurch gekennzeichnet, daß das Substrat (1) aus einer doppelschichtigen, im Bereich des Meßwiderstandes (R1) stark perforierten, dünnen Kunststoffolie besteht, bei der der Meßwiderstand (R1) zwischen beiden Folienschichten angebracht ist.

3. Mengendurchflußmesser nach den Ansprüchen 1 und/oder 2, d a d u r c h   g e k e n n z e i c h n e t, daß das Substrat (1) aus einer 12 $\mu$m dicken Polyimidfolie besteht.

4. Mengendurchflußmesser nach einem der Ansprüche 1 bis 3, d a d u r c h   g e k e n n z e i c h n e t, daß bei der Widerstandsbrücke Einrichtungen vorgesehen sind, die eine Frequenzgangkorrektur ermöglichen.

5. Mengendurchflußmesser nach Anspruch 4, d a d u r c h   g e k e n n z e i c h n e t, daß bei der Frequenzgangkorrektur die höheren Frequenzen maximal um den Faktor 2 stärker angehoben werden als die niedrigen Frequenzen.

0076951

1/2

FIG 1

FIG 2

# FIG 3

| | EINSCHLÄGIGE DOKUMENTE | | EP 82108815.0 |
|---|---|---|---|
| **Kategorie** | Kennzeichnung des Dokuments mit Angabe, soweit erforderlich, der maßgeblichen Teile | **Betrifft Anspruch** | **KLASSIFIKATION DER ANMELDUNG (Int. Cl. ³)** |
| A | <u>DE - A1 - 2 919 433</u> (ROBERT BOSCH) <br> * Zusammenfassung; Fig. 1,2,3 * <br> -- | 1,2 | G 01 F 1/68 |
| D,A | <u>DE - A1 - 2 925 975</u> (SIEMENS AG) <br> * Anspruch 1; Fig. 4 * <br> -- | 1 | |

**RECHERCHIERTE SACHGEBIETE (Int. Cl. ³)**

G 01 F 1/00

X    Der vorliegende Recherchenbericht wurde für alle Patentansprüche erstellt.

| Recherchenort | Abschlußdatum der Recherche | Prüfer |
|---|---|---|
| WIEN | 24-01-1983 | STÖGER |